# EUROPEAN PATENT SPECIFICATION

(11) **EP 4 085 725 B1**
(45) Date of publication and mention of the grant of the patent: **30.08.2023**
(21) Application number: 20932984.6
(22) Date of filing: 28.04.2020
(51) Int. Cl.: H04W 74/00, H04W 74/08, H04W 76/18

(54) **TRANSMITTING REPORTS OF RANDOM ACCESS PROCEDURE**
ÜBERTRAGEN VON BERICHTEN EINES ZUFALLSZUGRIFFSVERFAHREN
TRANSMISSION DE RAPPORTS D'UNE PROCÉDURE D'ACCÈS ALÉATOIRE

(43) Date of publication of application: 09.11.2022
(73) Proprietor: Nokia Technologies Oy, 02610 Espoo (FI)
(72) Inventor: PANTELIDOU, Anna, 91300 Massy (FR); TURTINEN, Samuli, 91100 Ii (FI); WU, Chunli, Beijing 100102 (CN)
(74) Representative: Nokia EPO representatives
(86) International application number: PCT/CN2020/087629
(87) International publication number: WO 2021/217466

(56) References cited:
- CN-A- 106 576 378
- CN-A- 107 231 648
- US-A1- 2017 013 634
- US-A1- 2018 352 582
- US-A1- 2020 100 299
- CATT: "Recording and Reporting of RACH Failure", 3GPP DRAFT; R2-1912150 RECORDING AND REPORTING OF RACH FAILURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Chongqing, P.R.China; 20191014 - 20191018 3 October 2019 (2019-10-03), XP051803765, Retrieved from the Internet: URL:https://ftp.3gpp.org/tsg_ran/WG2_RL2/T SGR2_107bis/Docs/R2-1912150.zip R2-1912150 Recording and Reporting of RACH Failure.docx [retrieved on 2019-10-03]
- PERSPECTA LABS ET AL: "PRACH Prioritization for MPS and MCS", 3GPP DRAFT; R2-1911735_PRACH_PRIORITIZATION_MPS_MCS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20190826 - 20190830 30 August 2019 (2019-08-30), XP051769408, Retrieved from the Internet: URL:http://www.3gpp.org/ftp/tsg_ran/WG2_RL 2/TSGR2_107/Docs/R2-1911735.zip [retrieved on 2019-08-30]
- QUALCOMM: "CB 104 - Summary of prioritized random access", 3GPP DRAFT; CB 104 R2-1801560 SUMMARY OF OFFLINE DISCUSSION ON PRIORITIZED RANDOM ACCESS PROCEDURE, 3RD GENERATION PARTNERSHIP PROJECT (3GPP), MOBILE COMPETENCE CENTRE ; 650, ROUTE DES LUCIOLES ; F-06 , vol. RAN WG2, no. Vancouver, Canada; 20180122 - 20180126 27 January 2018 (2018-01-27), XP051387001, Retrieved from the Internet: URL:http://www.3gpp.org/ftp/tsg%5Fran/WG2% 5FRL2/TSGR2%5FAHs/2018%5F01%5FNR/Docs/ [retrieved on 2018-01-27]
- VIVO: "Prioritized RA parameters for 2-step RACH", 3GPP DRAFT; R2-1908705 PRIORITIZED RA PARAMETERS FOR 2-STEP RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Prague, Czech Republic; 20190826 - 20190830 16 August 2019 (2019-08-16), XP051766527, Retrieved from the Internet: URL:http://www.3gpp.org/ftp/tsg_ran/WG2_RL 2/TSGR2_107/Docs/R2-1908705.zip [retrieved on 2019-08-16]
- Nokia, Nokia Shanghai Bell: "Procedural details for prioritized Random Access", 3GPP Draft; R2-1803461 Procedural details for prioritized Random Access, 3rd Generation Partnership Project (3GPP), Mobile Competence Centre ; 650, route des Lucioles ; F-06921 Sophia-Antipolis Cedex ; France, vol. RAN WG2, no. Athens, Greece; 20180226 - 20180302, 16 February 2018 (2018-02-16), XP051400530, Mobile Competence Centre ; 650, route des Lucioles ; F-06921 Sophia-Antipolis Cedex ; France

## Description

### FIELD

Embodiments of the present disclosure generally relate to the field of telecommunication and in particular, to apparatuses for transmitting reports of random access procedure.

### BACKGROUND

With development of communication systems, more and more technologies have been proposed. A physical random-access channel (PRACH) is a shared channel used by terminal devices to access the mobile network for cell set-up and burst data transmission. In order to access the PRACH, a terminal device may initiate a random access procedure. The terminal device may not successfully access the PRACH. It would be beneficial that the terminal device logs a report about the random access procedure.

R2-1912150 is related to recording and reporting of RACH failures and proposes to use LTE framework for NR. Indicates different failure cases, indicators and parameters to apply.

R2-1911735 is related to the impact of PRACH prioritization procedure on initial access attempts from Multimedia Priority Services (MPS), Mission Critical Services (MCS) and non-MPS users and argues that PRACH prioritization, when configured by the network, should be allowed for MPS and MCS users. MPS and MCS can gain significant benefits from PRACH prioritization at a minimum impact to non-MPS users.

R2-1801560 is related to prioritized random access and what to consider to differentiate the RACH parameters (backoff parameter and power ramping) based on: 1. Access categories 2. Type of RACH access (e.g. initial access, beam failure, SIrequest).

R2-1908705 is related to prioritized RA Parameters for 2-step RACH and discloses power ramping and backoff scaling factor.

### SUMMARY

In general, example embodiments of the present disclosure provide a solution for transmitting reports of random access procedure.

In a first aspect, there is provided an apparatus. The apparatus comprises means for transmitting, from a first device and to a second device, a request for access to a channel in a random access procedure; means for receiving from the second device a response to the request; means for generating a report of the random access procedure based at least in part on the response, the report at least indicating whether the random access procedure uses one or more prioritized parameters for access to the channel; and means for transmitting the report to the second device.

In a second aspect, there is provided an apparatus. The apparatus comprises means for receiving, at a second device and from a first device, a request for access to a channel in a random access procedure; means for transmitting to the first device a response to the request; and means for receiving, from the first device, a report of the random access procedure, the report at least indicating whether the random access procedure uses one or more prioritized parameters for access to the channel.

It is to be understood that the summary section is not intended to identify key or essential features of embodiments of the present disclosure, nor is it intended to be used to limit the scope of the present disclosure. Other features of the present disclosure will become easily comprehensible through the following description.

### BRIEF DESCRIPTION OF THE DRAWINGS

Some example embodiments will now be described with reference to the accompanying drawings, where:
Figs. 1A-1D illustrate signaling flows for random access procedures according to conventional technologies, respectively;
Fig. 2 illustrates an example communication environment in which example embodiments of the present disclosure can be implemented;
Fig. 3 illustrates a signaling flow for transmitting a report of random access procedure according to the present disclosure;
Fig. 4 illustrates a signaling flow for transmitting a report of random access procedure according to the present disclosure:
Fig. 5 illustrates a signaling flow for transmitting a report of random access procedure according to the present disclosure:
Fig. 6 illustrates a signaling flow for transmitting a report of random access procedure according to the present disclosure:
Fig. 7 illustrates a flowchart of a method implemented at a first apparatus according to the present disclosure;
Fig. 8 illustrates a flowchart of a method implemented at a second apparatus according to the present disclosure:
Fig. 9 illustrates a simplified block diagram of an apparatus that is suitable for implementing the present disclosure; and
Fig. 10 illustrates a block diagram of an example computer readable medium in accordance with the present disclosure.

Throughout the drawings, the same or similar reference numerals represent the same or similar element.

### DETAILED DESCRIPTION

Principle of the present disclosure will now be described with reference to some example embodiments. It is to be understood that these embodiments are described only for the purpose of illustration and help those skilled in the art to understand and implement the present disclosure, without suggesting any limitation as to the scope of the disclosure. Embodiments described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as New Radio (NR), Long Term Evolution (LTE), LTE-Advanced (LTE-A), Wideband Code Division Multiple Access (WCDMA), High-Speed Packet Access (HSPA), Narrow Band Internet of Things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a NR NB (also referred to as a gNB), a Remote Radio Unit (RRU), a radio header (RH), a remote radio head (RRH), a relay, an Integrated and Access Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some embodiments, the gNB can be split into a centralized unit (CU) and a decentralized unit (DU). That CU hosts the higher layers of the protocol stack including the radio resource control (RRC) and packet data convergence protocol (PDCP) while the DU hosts the lower layers such as the physical layer, medium access control(MAC) layer and radio link control (RLC) layer .

The term "terminal device" refers to any end device that may be capable of wireless communication. By way of example rather than limitation, a terminal device may also be referred to as a communication device, user equipment (UE), a Subscriber Station (SS), a Portable Subscriber Station, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an Internet of Things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

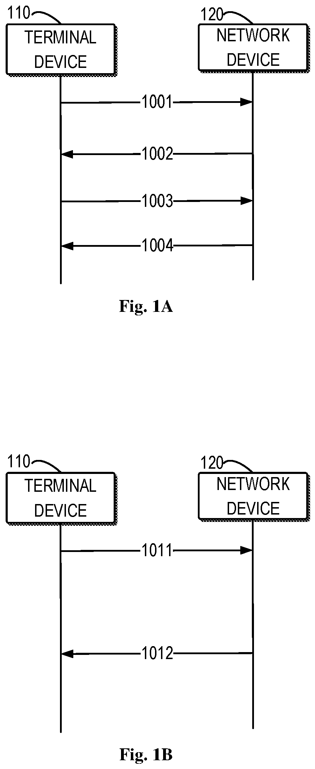

As mentioned above, the terminal device may initiate the random access procedure to access the PRACH. Random Access Procedure (RACH) can be contention based (CBRA) or contention free (CFRA). Generally, there are 2 types of CBRA, namely the 4-step RACH (as shown in Fig. 1A) and the 2-step RACH (as shown in Fig. 1B).

As shown in Fig. 1A, in 4-step CBRA, the terminal device 110 may start the random access procedure by sending 1001 a Random Access Preamble (i.e., Msg1) to the network device 120. If the network device 120 receives the Random Access Preamble successfully, it may transmit 1002 a Random Access Response (RAR) (i.e., Msg2) which contains the identity of the detected preamble, the time-advance, a temporary Cell Radio Network Temporary Identifier (C-RNTI) and an uplink grant for scheduling a physical uplink shared channel (PUSCH) transmission by the terminal device 110. The terminal device 110 upon receiving a RAR may send 1003 a scheduled transmission (i.e., Msg3) to the network device 120. If the network device 120 receives the scheduled transmission, it may send 1004 a contention resolution message (i.e., Msg4) to indicate whether there was contention or whether the transmission by the terminal device 110 was successful.

2-step CBRA has been introduced to reduce the number of round-trips required until the RACH procedure is successful from 2 round-trips to 1. The terminal device 110 may transmit 1011 Msg A which includes a combination of the Msg1 and Msg3. The network device 120 may transmit 1012 Msg B which includes a combination of the Msg2 and Msg4. Due to its property of minimizing RACH channel occupancy until successful RACH access, 2-step RACH has been also used for Listen Before Talk (LBT) in unlicensed access.

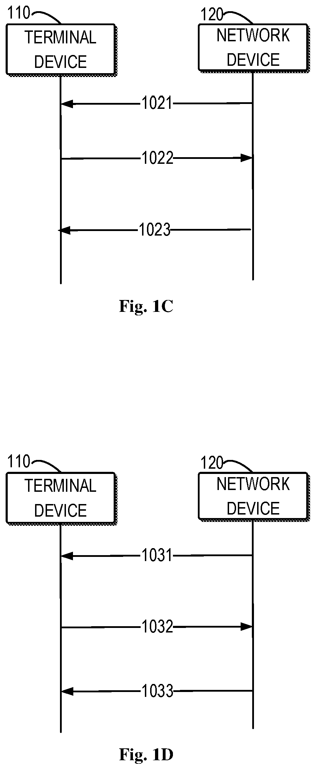

In addition to Contention Based Random Access, Contention-Free Random Access CFRA is also supported shown in Figs. 1C and 1D. As shown in Fig. 1C, in 4-step RA, the network device 120 may transmit 1021 a preamble assignment to the terminal device 110. The terminal device 110 may transmit 1022 a random access preamble to the network device 120. The network device 120 may transmit 1023 a RAR to the terminal device 110. In 2-step RA, as shown in Fig. 1D, the network device 120 may transmit 1031 PRACH preamble and PUSCH assignment to the terminal device 110. The terminal device 110 may transmit 1032 a PRACH random access preamble and PUSCH payload to the network device 120. The network device 120 may transmit 1033 a Msg B to the terminal device 110.

Multimedia Priority Service (MPS) may be a service providing priority access to users in this class. MPS provides service users with access priority to the system resources especially in situations of high congestion. For example, MPS Service users can be government-authorized personnel, emergency management officials and/or other authorized users. An MPS terminal device may obtain prioritized access to the network compared to other normal terminal devices during congestion by using a Unified Access Control mechanism which assigns a terminal device a prioritized Access Identity.

For example, there can be 3 types of MPS priority mechanisms, namely a) subscription-related, b) invocation-related and c) applied on existing quality of service (QoS) flows.
- Subscription related mechanisms: Some subscription related mechanisms are applied always for example using a connection establishment cause to indicate that special treatment is requested from the radio access network (RAN). As an alternative, subscription related mechanisms can be conditionally applied using the access baring parameters broadcast by the RAN. With those parameters access baring is based on Access Identities and allows distinguishing of the prioritized users from the non-prioritized users ones.
- Invocation-related parameters: They are divided into three groups: those that apply for mobile originated session initiation protocol (SIP) call/sessions, those that apply for mobile terminated SIP call/sessions, and those that apply for the Priority protocol data unit (PDU) connectivity services.
- Applied on existing QoS flows: QoS Flows requested in the Xn "Handover Request" or N2 "Handover Request" which are marked as priority flows have priority over other flows.

Similarly, Mission Critical Service (MCX service) may be a service that provides users from Mission Critical Organizations or users using mission critical applications from other organizations (for example., railways, or utilities) with priority under network congestion. An MCS user may obtain priority access to the Radio Access Network by using the Unified Access Control mechanism where priority involves priority message handling, priority treatment during authentication, security, and Mobility Management procedures.

Conventionally, it has been agreed to provide RACH Optimization for access identity 1 (where Multimedia Priority Services (MPS) are used exclusively) and for Mission Critical Services (MCS).

Besides, RACH prioritization was supported also for handover and beam failure recovery for 4-step RACH where different power ramping steps and scaling factor for backoff can be configured, and it is applicable to 2-step RACH as well. In addition, prioritization impacts initial access attempts for MPS and MCS compared to the non-prioritized access case in the following ways:
- (1) As the percentage of priority users grows to nearly 100%, the added benefit to priority accesses vanishes. The performance of priority users resembles that of non-priority users in a system without priority users.
- (2) PRACH prioritization should be reserved for a few special use cases (e.g., handover, beam failure recovery, and MPS) that can most benefit from a higher probability of success and shorter access delay as most gain due to the PRACH prioritization procedure is shown to occur with a low percentage of priority users.

Naturally, when prioritized access is enabled for a terminal device the backoff parameter is smaller than the non-prioritized access which can therefore increase the probability that multiple terminal devices collide with each other in the RACH attempt. Specifically, introduction of RACH prioritization allows to use higher power ramping steps for prioritized RACH as opposed to non-prioritized RACH. Additionally, it allows to introduce scalingFactorBI, a parameter less than 1, that is used to scale the Backoff of prioritized RACH to smaller values than non-prioritized RACH.

Enabling RACH prioritization for a large number of users can have a negative effect in performance since they are sharing the same PRACH resources and preambles with non-prioritized RA if it is CBRA. Furthermore, improper parameter setting might not achieve the expected effect for the RA procedures being prioritized. Besides, a user may perform multiple RACH procedures and even a small number of users can lead to multiple RACH attempts.

Further, creation of a RACH report by the UE has been introduced for RACH optimization. Additionally, RACH prioritization agreements have been introduced as follows: For 2 step CBRA, RA prioritization is supported at least for handover and beam failure recovery. RA prioritization for 2 step CBRA is controlled by network. RA prioritization parameters are separately configured for 2 step CBRA and 4 step CBRA. ra-Prioritization2Step is optionally added to BeamFailureRecoveryConfig IE and RACH-ConfigDedicated IE.

According to other agreements, RA prioritization for MCS and MPS should be applicable for both 2-step and 4-step RACH procedures. RA prioritization parameters for MCS and MPS for both 2-step and 4-step RACH procedures are obtained from SIB1 ra-PrioritizationForAccessIdentity field.

However, RACH prioritization has not been considered for the RACH report. In order to solve at least part of the above problems. A solution on transmitting a report of random access procedure which is prioritized is needed. According to embodiments of the present disclosure, there is provided a solution for reporting reports of random access procedure. A first device initiates a random access procedure and logs information about whether the random access procedure is prioritized and the number of prioritized failed RACH attempts in the random access procedure until the procedure is successful. The first device sends such information to a second device which updates parameters for prioritized random access procedures. In this way, the parameters can be adjusted dynamically, thereby improving successful rate in accessing the random access channel. Further, congestion on the random access channel can be avoided.

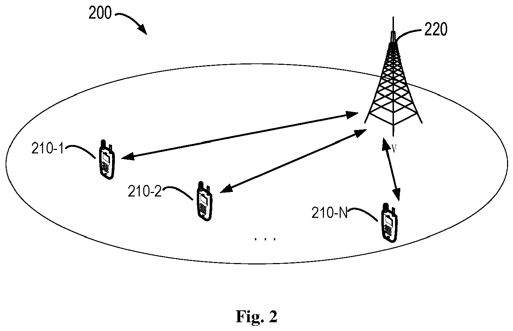

Fig. 2 illustrates a schematic diagram of a communication environment 200 in which embodiments of the present disclosure can be implemented. The communication environment 200, which is a part of a communication network, comprises a device 210-1, a device 210-2, .... , a device 210-N, which can be collectively referred to as "first device(s) 210." The communication environment 200 further comprises a second device 220 that can communicate with the first device(s) 210.

The communication environment 200 may comprise any suitable number of devices and cells. In the communication environment 200, the first device 210 and the second device 220 can communicate data and control information to each other. In the case that the first device 210 is the terminal device and the second device 220 is the network device, a link from the second device 220 to the first device 210 is referred to as a downlink (DL), while a link from the first device 210 to the second device 220 is referred to as an uplink (UL). The second device 220 and the first device 210 are interchangeable.

It is to be understood that the number of first devices and cells and their connections shown in Fig. 2 is given for the purpose of illustration without suggesting any limitations. The environment 200 may include any suitable number of devices and networks adapted for implementing embodiments of the present disclosure.

Communications in the communication environment 200 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

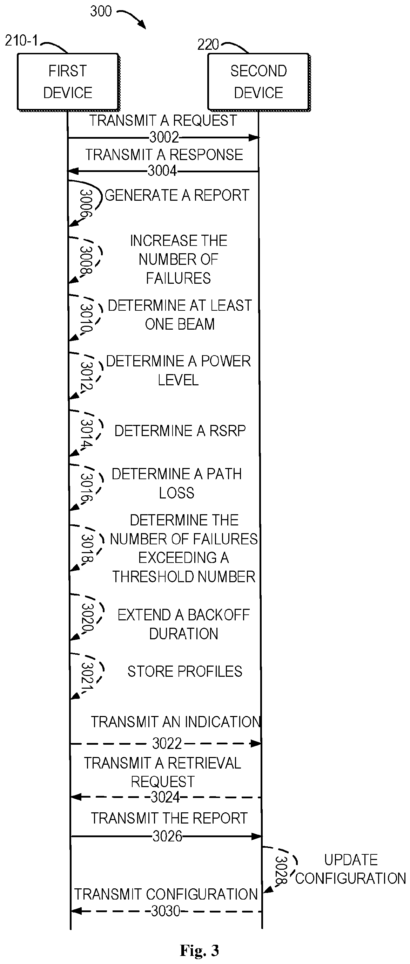

Example embodiments of the present disclosure will be described in detail below with reference to the accompanying drawings. Reference is now made to Fig. 3, which illustrates a signaling flow 300 for reporting reports of random access procedures according to example embodiments of the present disclosure. For the purpose of discussion, the signaling flow 300 will be described with reference to Fig. 2. The signaling flow 300 may involve the first device 210-1 and the second device 220.

The first device 210-1 transmits 3002 a request for access to a channel in a random access procedure. For example, if the random access procedure is 4-step, the first device 210-1 may transmit a random access preamble to the second device 220. Alternatively, the first device 210-1 may transmit a random access preamble and PUSCH payload to the second device if the random access procedure is a 2-step RACH.

The second device 220 transmits 3004 to the first device 210-1 a response to the request. For example, the second device 220 may transmit RAR to the first device 210-1 for the 4-step random access procedure. In other embodiments, if the random access procedure is 2-step, the second device 220 may transmit contention resolution to the first device 210-1. The response indicates whether the access to the channel is successful or not.

The first device 210-1 generates 3006 a report of the random access procedure based at least in part on the response. The report indicates whether the random access procedure uses one or more prioritized parameters for access to the channel. In other words, the report may indicate whether the random access procedure is prioritized or non-prioritized. If the random access procedure uses one or more prioritized parameters , it means that the random access procedure is prioritized. For example, if the random access procedure has Access Identity 1 or 2 which is the prioritized parameter, the random access procedure is prioritized. In some embodiments, the report may also indicate whether the prioritized procedure is 2-step CBRA or 4-step CBRA. In some embodiments, 3 bits may be used to indicate prioritization category of the random access procedure. For example, the prioritization category may comprise one or more of 2-step CBRA prioritized Access Identity 1, 2-step CBRA prioritized Access Identity 2, 4-step CBRA prioritized Access Identity 1, 4-step CBRA prioritized Access Identity 2. The bits may also indicate whether the RACH procedure was a non-prioritized 2-step or 4-step RACH. It should be noted that there may be any suitable numbers of bits to indicate whether the random access procedure is prioritized or non- prioritized and the type of the RACH (2-step or 4-step CBRA). In this way, the parameters for the prioritized random access procedures can be adjusted to improve accessing rate.

In an example embodiment, the prioritized random access procedure may be triggered if a handover of the terminal device 210-1 is performed. In other embodiments, if a beam failure recovery is performed at the terminal device 210-1, the prioritized random access procedure may be triggered. Alternatively, if the terminal device 210-1 is using a predetermined access identity (for example, Access Identity 1 or 2), the random access procedure may be prioritized.

The report may also indicate the number of failures for the access to the channel. In other words, the report may indicate the number of attempts for the access to the channel until the first device 210-1 successfully accesses the channel. In some embodiments, if the response indicates a failure for the access to the channel, the first device 210-1 may increase 3008 the number of failures in the report. The report may be updated for each attempt for the access to the channel. In some embodiments, the number of failures may be kept track with respect to whether the RACH procedure is prioritized (access identity 1 or 2) or non-prioritized. Alternatively or in addition, the number of failures may be kept track with respect to whether the random access procedure is 2-step CBRA or 4-step CBRA

In some embodiments, the first device 210-1 may determine 3010 one or more beams on which the random access procedure is performed. Taking one beam as an example, the first device 210-1 may determine 3012 a power level of the first device 210-1 at the beam. The report may indicate the power level used for the prioritized or non-prioritized random-access attempt. In addition, the first device 210-1 may determine whether the power level exceeds a threshold power. The report may also indicate the number of failures with the power level exceeding the threshold power. For example, the report may indicate the number of attempts with maximum UE power. In this way, the number of terminal devices on the same resource can be decreased, thereby reducing interference between terminal devices.

Alternatively or in addition, the first device 210-1 may determine 3014 a reference signal received power (RSRP) on the beam. The specific RSRP value may be indicated in the report. In some embodiments, the report may also indicate whether RSRP exceeds an RSRP threshold. In this way, the prioritized power ramping step parameters may be updated to a higher/lower value.

In other embodiments, the first device 210-1 may determine 3016 a path loss between the first device 210-1 and the second device 220 on the beam if the response indicates a failure for the access to the channel. For example, the first device 210-1 may use the RSRP to estimate the path loss. It should be noted that the path loss can be determined based on other reference signal quality.

If the random access procedure spans multiple beams, the report may be generated/updated per beam for each failed attempt in the RACH procedure. For example, the report may comprise information of one or more of the following: prioritization, power level, RSRP, path loss, the number of attempts with maximum UE power on each of the multiple beams for each attempt in the RACH procedure.

In some embodiments, if the attempt for accessing the channel is successful, the first device 210-1 may also record related information in the report. For example, the first device 210-1 may record one or more of the following: the RSRP value, path loss, whether maximum transmission power was used for this successful attempt.

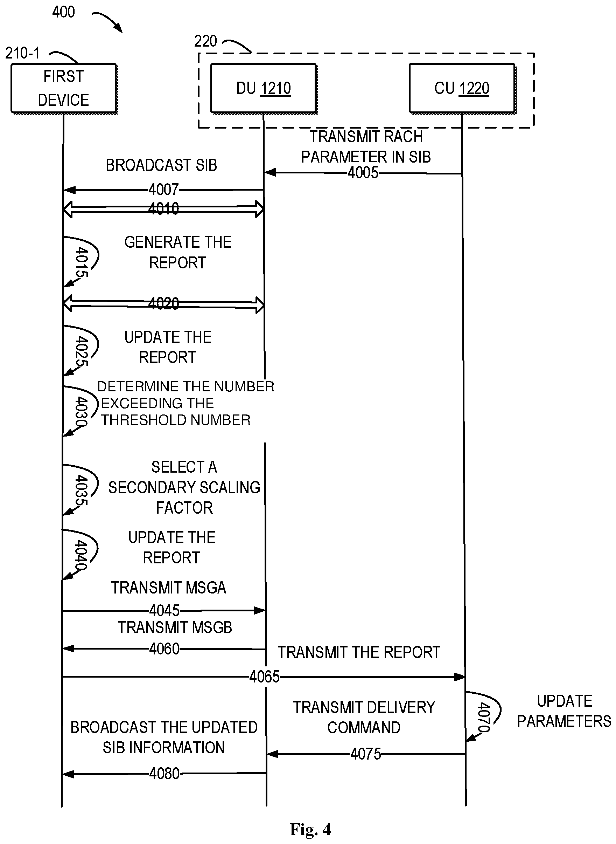

In some embodiments, the first device 210-1 may determine 3018 whether the number of prioritized failures for a given access identity exceeds a threshold number. The threshold number may depend on the used Access Identity of the prioritized access. If the number of failures exceeds the threshold number, the first device 210-1 may extend 3020 a backoff duration before a subsequent attempt for the random access procedure. By way of example, the terminal device 210-1may receive configuration, through system information block (SIB) or dedicated signaling, comprising different scaling factors, for example, a primary scaling factor which is less than 1 used for prioritization and a secondary scaling factor which is larger than 1. The secondary scaling factor may be used to increase the backoff duration in case the number of failed attempts exceeds the threshold number to relieve congestion. In other embodiments, the configuration may not indicate the secondary scaling factor. In this situation, the first device 210-1 may stop using the primary value, which also increases the backoff duration for the prioritized random access procedure. Details of this embodiment will be described with the reference to Fig. 4 later. In this way, it avoids too many prioritized random access procedures being initiated on the same resource using short backoff window values, thereby reducing congestion and the chance for collision. Further, the terminal device can adjust the backoff duration by itself, thereby reducing latency.

The report may further indicate that the backoff duration is extended. For example, one bit may be used to indicate such extension. For example, if the terminal device 210-1 switches from the primary scaling factor to the secondary scaling factor for a certain attempt in the random access procedure, the report may indicate such switch.

In some embodiments, the first device 210-1 may store 3021 reports of prioritized random access procedures separately from reports of non-prioritized random access procedures. For example, the reports of prioritized random access procedures and the non-prioritized random access procedures can be stored in different logical store resources. Alternatively, the reports of prioritized random access procedures and the non-prioritized random access procedures can be stored in different physical store resources.

The first device 210-1 may transmit 3022 to the second device 220 an indication that the report is available if the random access procedure is prioritized. For example, the first device 210-1 may indicate the availability of reports of prioritized random access procedure separately from reports of non-prioritized random access procedure. The first device 210-1 may indicate availability of reports of prioritized random access procedure as soon as the first prioritized random access procedure is logged/stored. Alternatively or in addition, the first device 210-1 may indicate to the network device 220 the existence of reports of non-prioritized random access procedure when the report is completely full. For example, if the maximum size of the report is logging of 8 random access procedures, then the availability indication can be sent when the 8^{th} random access procedure has been logged in the report. To summarize, the UE can indicate the availability of both prioritized and non-prioritized RACH information together or separately through the availability indicator depending on whether it have logged prioritized and/or non-prioritized RACH information.

In some embodiments, the second device 220 may transmit 3024 a retrieval request to the first device 210-1. If the second device 220 needs to obtain reports of one or more predetermined types of random access procedure, the retrieval request may indicate the one or more predetermined types of random access procedure. The one or more predetermined type may be the prioritized type, e.g., Access Identity 1 or Access Identity 2 or a newly defined Access Identity providing prioritization. Alternatively, the one or more predetermined type may be the non-prioritized type. The one or more predetermined type may be both the prioritized type and the non-prioritized type.

The first device 210-1 transmits 3026 the report to the second device 220. For example, if the type of the random access procedure matches with the one or more predetermined types, the first device 210-1 may transmit the report. Alternatively, the first device 210-1 may transmit the report without receiving the retrieval request.

The second device 220 may update 3028 configuration based on the report. The second device 220 may transmit 3030 the updated configuration to the first device 210-1. For example, the second device 220 may know if the failure is due to a large number of prioritized attempts on a given resource and can update separately the prioritization parameters. For instance, the second device 220 can increase the scaling factor to allow contention over a larger backoff window in prioritization. Additionally, the second device 220 can update the prioritized power ramping step parameters to a higher/lower value based on one or more of the power levels, RSRP and path loss in the report. Alternatively or in addition, if the report indicates the number of attempts at maximum UE power, the network device 220 may decrease the number of users on this resource since transmission at maximum UE power can create high interference on other transmissions.

In some embodiments, if report indicates that the terminal device 210-1 uses the secondary scaling factor, the second device 220 can determine that there is a lot of contention in the specific resources. Contention can be relieved by using a larger prioritized bakcoff window or by allocating users to different resources. In this way, the second device 220 is able to monitor performance per prioritization level to better adjust the prioritization backoff and power ramping parameters as those parameters depend on priority.

According to embodiments of the present disclosure, the parameters for the prioritized random access procedures can be adjusted to improve accessing rate. Further, the number of terminal devices on the same resource can be decreased, thereby reducing interference between terminal devices. Alternatively, the terminal device can adjust the backoff duration by itself, thereby reducing latency.

Fig. 4 illustrates a signaling flow 400 for reporting reports of random access procedures according to example embodiments of the present disclosure. For the purpose of discussion, the signaling flow 400 will be described with reference to Fig. 2. The signaling flow 400 may involve the first device 210-1 and the second device 220. Only as an example, as shown in Fig. 4, the second device 220 may comprise a centralized unit (CU) 1220 and a distributed unit (DU) 1210.

The CU 1220 may transmit configurations to the first device 210-1. In particular, the CU 1220 may transmit 4005 RACH parameters in system information block (SIB) to the DU 1210. The DU 1210 may broadcast 4007 the SIB so that the first device 210-1 receives the broadcast. The configuration may indicate a primary scaling factor which is less than 1 and a secondary scaling factor which is larger than 1. The first device 210-1 may initiate 4010 a first attempt for 2-step CBRA which is prioritized with access identity 1. If the first attempt is failed, the first device 210-1 may generate 4015 a report for the 2-step CBRA. The report may indicate one or more of the following for the first attempt: the access identity 1, the number of attempts, the primary scaling factor, the power level, the RSRP, the path loss, and an indicator whether the maximum power is reached.

The first device 210-1 may further initiate 4020 a second attempt for 2-step CBRA which is prioritized with access identity 1. If the second attempt is failed, the first device 210-1 may update 4025 the report for the 2-step CBRA. The report may further indicate one or more of the followings for the second attempt: the access identity 1, the number of attempts, the primary scaling factor, the power level, the RSRP, the path loss, and an indicator whether the maximum power is reached.

The first device 210-1 may determine 4030 whether the number of failures exceeds a threshold number. If the number of the failures exceeds the threshold number, the first device 210-1 may select 4035 the secondary scaling factor. The first device 210-1 may update 4040 the report to indicate that the secondary scaling factor is used.

The first device 210-1 may transmit 4045 Msg A (i.e., the third attempt) for the 2-step CBRA to the second device 220. The DU 1210 220 may transmit 4060 MsgB which includes a combination of the Msg2 and Msg4 for the 2-step CBRA to the first device 210-1. In some embodiments, the first device 210-1 may further update the report for the third attempt. The first device 210-1 may transmit 4065 the report to the CU 1220. Step 4065 may take place upon request from the CU 1220 220. The CU 1220 may update 4070 the ra-prioritization parameters and the trigger criterion for utilizing the secondary scaling factor based on the report. The ra-prioritization parameters and the trigger criterion may be included in SIB. The CU 1220 transmits 4075 a system information delivery command to the DU 1210. The DU may broadcast 4080 the SIB. Alternatively, the ra-prioritization parameters and the trigger criterion for utilizing the secondary scaling factor may be transmitted from the CU 1220 to the first device 210-1 via (RRC) signaling.

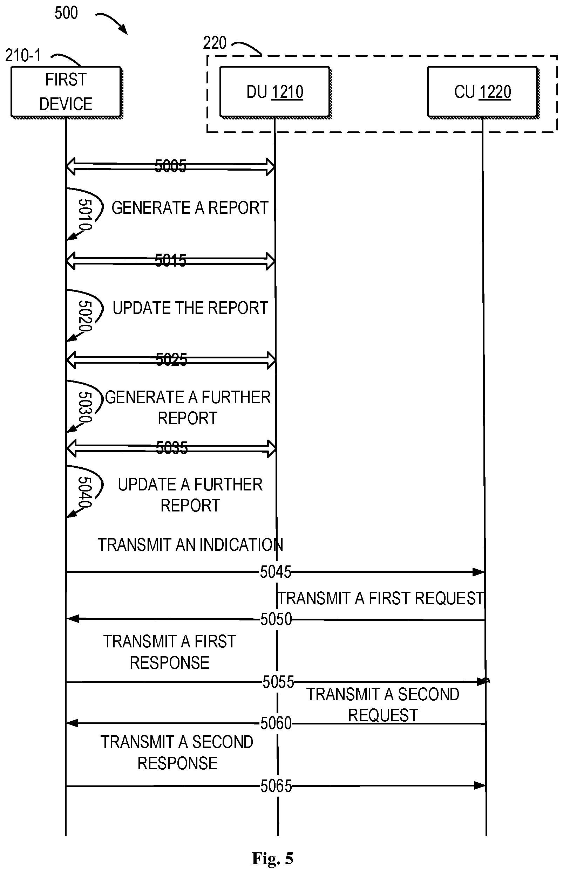

Fig. 5 illustrates a signaling flow 500 for reporting reports of random access procedures according to example embodiments of the present disclosure. For the purpose of discussion, the signaling flow 500 will be described with reference to Fig. 2. The signaling flow 500 may involve the first device 210-1 and the second device 220. Only as an example, as shown in Fig. 5, the second device 220 may comprise a centralized unit (CU) 1220 and a distributed unit (DU) 1210. Since prioritized RACH information is used to reduce access delay of the RACH procedure, the network should be able to react faster to RACH failures that pertain to prioritized RACH access. This information would be also meaningful to be reflected promptly from the CU 1220 to the DU 1210. If ra-prioritization parameters are broadcasted in SIB1, this can help the CU 1220 send the new SIB1 parameters to the DU 1210 faster. If those parameters are sent to the first device 210-1 in a dedicated manner, this can also help the CU 1220 update the internal parameters faster through dedicated RRC signaling. Thus, the signaling flow 500 is for retrieve prioritized and non-prioritized reports with different timings from the terminal devices.

The first device 210-1 may initiate 5005 a first attempt for 4-step CBRA which is prioritized with access identity 1. If the first attempt is failed, the first device 210-1 may generate 5010 a report for the 4-step CBRA. The report may indicate one or more of the following for the first attempt: the access identity 1, the number of attempts, the primary scaling factor, the power level, the RSRP, the path loss, and an indicator whether the maximum power is reached.

The first device 210-1 may further initiate 5015 a second attempt for 4-step CBRA which is prioritized with access identity 1. If the second attempt is successful, the first device 210-1 may update 5020 the report for the 4-step CBRA. The report may further indicate one or more of the followings for the second attempt: the access identity 1, the number of attempts, the primary scaling factor, the power level, the RSRP, the path loss, and , an indicator whether the maximum power is reached.

The first device 210-1 may initiate 5025 a first attempt for 4-step CBRA which is non-prioritized. If the first attempt is failed, the first device 210-1 may generate 5030 a further report for the non-prioritized 4-step CBRA. The report may indicate one or more of the following for the first attempt: the number of attempts, the primary scaling factor, the power level, the RSRP, the path loss, and an indicator whether the maximum power is reached.

The first device 210-1 may further initiate 5035 a second attempt for the non-prioritized 4-step CBRA. If the second attempt is successful, the first device 210-1 may update 5040 the report for the non-prioritized 4-step CBRA. The report may further indicate one or more of the following for the second attempt: the number of attempts, the primary scaling factor, the power level, the RSRP, the path loss, and an indicator whether the maximum power is reached.

The first device 210-1 may transmit 5045 to the CU 1220 an indication about the availability of RACH information at the UE. For example, the first device 210-1 may send to the CU 1220 an availability indicator indicating availability of prioritized reports. Separate availability indicator can be used for the case of non-prioritized reports availability. For instance, if the first device 210-1 indicates the availability of both prioritized and non-prioritized reports, the CU 1220 can decide to only retrieve prioritized reports.

The CU 1220 may transmit 5050 to the first device 210-1 a first request to retrieve the prioritized reports. The first device 210-1 may transmit 5055 to the CU 1220 a first response which comprises the prioritized reports. The CU 1220 may transmit 5060 to the first device 210-1 a second request to retrieve the non-prioritized reports. The first device 210-1 may transmit 5065 to the CU 1220 a second response which comprises the non-prioritized reports. In this way, prioritized RACH information can be logged in the same way as non-prioritized RACH information but in a different UE RACH report.

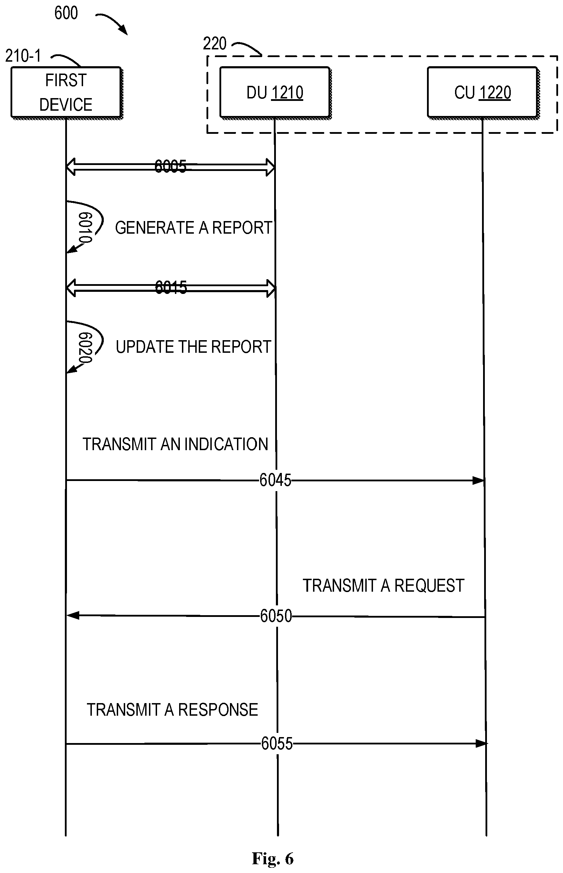

In some embodiments, since prioritized RACH information involves time critical RACH procedures, the first device 210-1 may not log old prioritized RACH information but store only the last successful prioritized RACH procedure. The first device 210-1 may only log non-prioritized RACH information. Referring to Fig. 6, Fig. 6 illustrates a signaling flow 600 for reporting reports of random access procedures according to example embodiments of the present disclosure. For the purpose of discussion, the signaling flow 600 will be described with reference to Fig. 2. The signaling flow 600 may involve the first device 210-1 and the second device 220. Only as an example, as shown in Fig. 6, the second device 220 may comprise a centralized unit (CU) 1220 and a distributed unit (DU) 1210.

The first device 210-1 may initiate 6005 a first attempt for 4-step CBRA which is prioritized with access identity 1. If the first attempt is failed, the first device 210-1 may generate 6010 a report for the 4-step CBRA. The report may indicate one or more of the following for the first attempt: the access identity 1, the number of attempts, the primary scaling factor, the power level, the RSRP, the path loss, and an indicator whether the maximum power is reached.

The first device 210-1 may further initiate 6015 a second attempt for 4-step CBRA which is prioritized with access identity 1. If the second attempt is successful, the first device 210-1 may update 6020 the report for the 4-step CBRA. The report may further indicate one or more of the followings for the second attempt: the access identity 1, the number of attempts, the primary scaling factor, the power level, the RSRP, the path loss, and an indicator whether the maximum power is reached.

The first device 210-1 may transmit 6045 to the CU 1220 an indication about the availability of the report of the prioritized 4-step CBRA. The CU 1220 may transmit 6050 to the first device 210-1 a request to retrieve the prioritized reports. The first device 210-1 may transmit 6055 to the CU 1220 a response which comprises the prioritized reports.

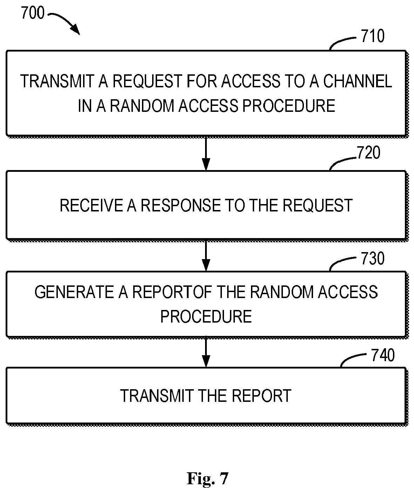

Fig. 7 shows a flowchart of an example method 700 implemented at a first device 210 in accordance with some example embodiments of the present disclosure. For the purpose of discussion, the method 700 will be described from the perspective of the first device 210-1.

At block 710, the first device 210-1 transmits a request for access to a channel in a random access procedure. For example, if the random access procedure is 4-step, the first device 210-1 may transmit a random access preamble to the second device 220. Alternatively, the first device 210-1 may transmit a random access preamble and PUSCH payload to the second device if the random access procedure is 2-step.

At block 720, the first device 210-1 receives a response to the request from the second device 220. For example, the first device 210-1 may receive RAR from the second device 220 for the 4-step random access procedure. In other embodiments, if the random access procedure is 2-step, the first device 210-1 may receive contention resolution from the second device 220. The response indicates whether the access to the channel is successful or not. In some embodiments, the first device 210-1 may receive an implicit response from the second device 220. In other words, if there is no specific response from the second device 220, the first device 210-1 may regard this situation as an implicit response indicating that the prioritized access to the channel is not successful.

At block 730, the first device 210-1 generates a report of the random access procedure based at least in part on the response. The report indicates whether the random access procedure uses one or more prioritized parameters for the access to the channel. For example, if the random access procedure has Access Identity 1 or 2, the random access procedure is prioritized. In some embodiments, 3 bits may be used to indicate prioritization category of the random access procedure. For example, the prioritization category may comprise one or more of 2-step prioritized Access Identity 1, 2-step prioritized Access Identity 2, 4-step prioritized Access Identity 1, 4-step prioritized Access Identity 2. The bits may also indicate the non-prioritized cases. It should be noted that there may be any suitable number of bits to indicate whether the random access procedure is prioritized or non- prioritized. In this way, the parameters for the prioritized random access procedures can be adjusted to improve accessing rate. As mentioned above, in some embodiments, the first device 210-1 may receive an implicit response from the second device 220. In other words, if there is no specific response from the second device 220, the first device 210-1 may regard this situation as an implicit response indicating that the prioritized access to the channel is not successful. In this situation, the first device 210-1 may generate the report based on the implicit response.

The report may also indicate the number of failures for the access to the channel. In other words, the report may indicate the number of attempts for the access to the channel until the first device 210-1 successfully accesses the channel. In some embodiments, if the response indicates a failure for the access to the channel, the first device 210-1 may increase 3008 the number of failures in the report. The report may be updated for each attempt for the access to the channel.

In some embodiments, the first device 210-1 may determine one or more beams on which the random access procedure is performed. Taking one beam as an example, the first device 210-1 may determine 3012 a power level of the first device 210-1 at the beam. The report may indicate the power level. In addition, the first device 210-1 may determine whether the power level exceeds a threshold power. The report may also indicate the number of failures at a UE power level exceeding the threshold power. For example, the report may indicate the number of attempts with maximum UE power. In this way, the number of terminal devices on the same resource can be decreased, thereby reducing interreference between terminal devices.

Alternatively or in addition, the first device 210-1 may determine a reference signal received power (RSRP) on the beam. The specific RSRP value may be indicated in the report. In some embodiments, the report may also indicate whether RSRP exceeds an RSRP threshold. In this way, the prioritized power ramping step parameters may be updated to a higher/lower value.

In other embodiments, the first device 210-1 may determine a path loss between the first device 210-1 and the second device 220 on the beam if the response indicates a failure for the access to the channel. For example, the first device 210-1 may use the RSRP to estimate the path loss. It should be noted that the path loss can be determined based on other reference signal quality.

If the random access procedure spans multiple beams, the report may be generated/updated per beam for each. For example, the report may comprise information of one or more of the following: prioritization, power level, RSRP, path loss, the number of attempts with maximum UE power on each of the multiple beams for each RACH procedure.

In some embodiments, the first device 210-1 may determine whether the number of failures exceeds a threshold number. If the number of failures exceeds the threshold number, the first device 210-1 may extend 3020 a backoff duration before a subsequent attempt for the random access procedure. This threshold number can be different for 2-step or 4-step random access procedure. By way of example, the terminal device 210-1 may receive configuration, through system information block (SIB) or dedicated signaling, comprising different scaling factors, for example, a primary value which is less than 1 and a secondary value which is larger than 1. The secondary value may be used to increase the backoff duration in case the number of failed attempts exceeds the threshold number. In other embodiments, the configuration may not indicate the secondary value. In this situation, the first device 210-1 may stop using the primary value, which also increases the backoff duration for the prioritized random access procedure. In this way, it avoids too many prioritized random access procedures being initiated on the same resource, thereby reducing congestion. Further, the terminal device can adjust the backoff duration by itself, thereby reducing latency.

The report may further indicate that the backoff duration is extended. For example, one bit may be used to indicate such extension. For example, if the terminal device 210-1 switches from the primary value to the secondary value for a certain attempt in the random access procedure, the report may indicate such switch.

In some embodiments, the first device 210-1 may store reports of prioritized random access procedures separately from reports of non-prioritized random access procedures. For example, the reports of prioritized random access procedures and the non-prioritized random access procedures can be stored in different logical store resources. Alternatively, the reports of prioritized random access procedures and the non-prioritized random access procedures can be stored in different physical store resources. In other embodiments, the reports of prioritized random access procedures and the non-prioritized random access procedures can be stored on common resources.

In some embodiments, the first device 210-1 may transmit to the second device 220 an indication that the report is available if the random access procedure is prioritized. For example, the first device 210-1 may indicate the availability of reports of prioritized random access procedure separately from reports of non-prioritized random access procedure. The first device 210-1 may indicate availability of reports of prioritized random access procedure as soon as the first prioritized random access procedure is logged/stored. Alternatively or in addition, the first device 210-1 may indicate to the network device 220 the existence of reports of non-prioritized random access procedure when the report is completely full. For example, if the maximum size of the report is logging of 8 random access procedures, then the availability indication can be sent when the 8^{th} random access procedure has been logged in the report. To summarize, the UE can indicate the availability of both prioritized and non-prioritized RACH information together or separately through the availability indicator depending on whether it has logged prioritized and/or non-prioritized RACH information.

At block 740, the first device 210-1 transmits the report to the second device 220. In some embodiments, the second device 220 may transmit a retrieval request to the first device 210-1. If the second device 220 needs to obtain reports of one or more predetermined types of random access procedure, the retrieval request may indicate the one or more predetermined types of random access procedure. The one or more predetermined type may be the prioritized type, e.g., Access Identity 1 or Access Identity 2 or a newly defined Access Identity providing prioritization. Alternatively, the one or more predetermined type may be the non-prioritized type. The one or more predetermined type may be both the prioritized type and the non-prioritized type. For example, if the type of the random access procedure matches with the one or more predetermined types, the first device 210-1 may transmit the report. Alternatively, the first device 210-1 may transmit the report without receiving the retrieval request. In some embodiments, the first device 210-1 may receive configuration updated based on the report.

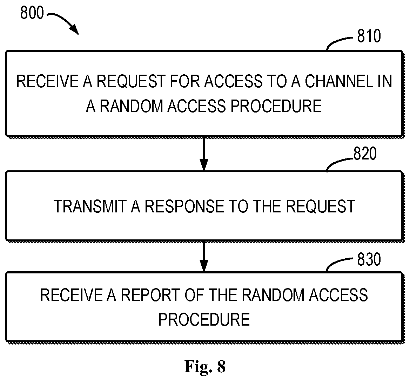

Fig. 8 shows a flowchart of an example method 800 implemented at a second device 220 in accordance with some example embodiments of the present disclosure. For the purpose of discussion, the method 800 will be described from the perspective of the second device 220.

At block 810, the second device 220 receives a request for access to a channel in a random access procedure. For example, if the random access procedure is 4-step, the first device 210-1 may transmit a random access preamble to the second device220. Alternatively, the first device 210-1 may transmit a random access preamble and PUSCH payload to the second device if the random access procedure is 2-step.

At block 820, the second device 220 transmits to the first device 210-1 a response to the request. For example, the second device 220 may transmit RAR to the first device 210-1 for the 4-step random access procedure. In other embodiments, if the random access procedure is 2-step, the second device 220 may transmit contention resolution to the first device 210-1. The response indicates whether the access to the channel is successful or not.

In some embodiment, the second device 220 may receive from the first device 210-1 an indication that the report is available if the random access procedure is prioritized. In some embodiments, the second device 220 may transmit 3024 a retrieval request to the first device 210-1. If the second device 220 needs to obtain reports of one or more predetermined types of random access procedure, the retrieval request may indicate the one or more predetermined types of random access procedure. The one or more predetermined type may be the prioritized type. Alternatively, the one or more predetermined type may be the non-prioritized type. The one or more predetermined type may be both the prioritized type and the non-prioritized type.

At block 830, the second device 220 receives a report of the random access procedure from the first device 210-1. The report indicates whether the random access procedure is prioritized or non- prioritized. For example, if the random access procedure has Access Identity 1 or 2, the random access procedure is prioritized. In some embodiments, 3 bits may be used to indicate prioritization category of the random access procedure. For example, the prioritization category may comprise one or more of 2-step prioritized Access Identity 1, 2-step prioritized Access Identity 2, 4-step prioritized Access Identity 1, 4-step prioritized Access Identity 2. The bits may also indicate the non-prioritized cases. It should be noted that there may be any suitable numbers of bits to indicate whether the random access procedure is prioritized or non- prioritized. In this way, the parameters for the prioritized random access procedures can be adjusted to improve accessing rate.

The report also indicates the number of failures for the prioritized access to the channel. In other words, the report may indicate the number of attempts for the access to the channel until the first device 210-1 successfully accesses the channel. In some embodiments, if the response indicates a failure for the access to the channel, the first device 210-1 may increase 3008 the number of failures in the report. The report may be updated for each attempt for the access to the channel.

In some embodiments, the report may indicate the power level. In addition, the report may also indicate the number of failures with the power level exceeding the threshold power. For example, the report may indicate the number of attempts with maximum UE power. In some embodiments, the specific RSRP value may be indicated in the report. Alternatively or in addition, the report may also indicate whether RSRP exceeds an RSRP threshold. The report may further indicate a path loss between the first device 210-1 and the second device 220 on the beam if the response indicates a failure for the access to the channel.

If the random access procedure spans multiple beams, the report may be generated/updated per beam for each. For example, the report may comprise information of one or more of the following: prioritization, power level, RSRP, path loss, the number of attempts with maximum UE power on each of the multiple beams for each RACH procedure.

In some embodiments, the second device may transmit configuration comprising different scaling factors, for example, a primary value which is less than 1 and a secondary value which is larger than 1. The secondary value may be used to increase the backoff duration in case the number of failed attempts exceeds the threshold number. In other embodiments, the configuration may not indicate the secondary value. The report may further indicate that the backoff duration is extended. For example, one bit may be used to indicate such extension. For example, if the terminal device 210-1 switches from the primary value to the secondary value for a certain attempt in the random access procedure, the report may indicate such switch.

In addition, the second device 220 may update configuration based on the report. The second device 220 may transmit 3030 the updated configuration to the first device 210-1. For example, the second device 220 may know if the failure is due to a large number of prioritized attempts on a given resource and can update separately the prioritization parameters. For instance, the second device 220 can increase the scaling factor to allow contention over a larger backoff window in prioritization. Additionally, the second device 220 can update the prioritized power ramping step parameters to a higher/lower value based on one or more of the power levels, RSRP and path loss in the report. Alternatively or in addition, if the report indicates the number of attempts at maximum UE power, the network device 220 may decrease the number of users on this resource since transmission at maximum UE power can create high interference on other transmissions.

In some embodiments, if report indicates that the terminal device 210-1 uses the secondary scaling factor, the second device 220 can determine that there is a lot of contention in the specific resources. Contention can be relieved by using a larger prioritized bakcoff window or by allocating users to different resources. In this way, the second device 220 is able to monitor performance per prioritization level to better adjust the prioritization backoff and power ramping parameters as those parameters depend on priority.

In some example embodiments, a first apparatus capable of performing any of the method 700 (for example, the first device 210) may comprise means for performing the respective operations of the method 700. The means may be implemented in any suitable form. For example, the means may be implemented in a circuitry or software module. The first apparatus may be implemented as or included in the first device 210. In some embodiments, the means may comprise at least one processor and at least one memory including computer program code. The at least one memory and computer program code are configured to, with the at least one processor, cause performance of the apparatus.

In some embodiments, the apparatus comprises means for transmitting, at a first device and to a second device, a request for access to a channel in a random access procedure; means for receiving from the second device a response to the request; means for generating a report of the random access procedure based at least in part on the response, the report at least indicating whether the random access procedure uses one or more prioritized parameters for access to the channel; and means for transmitting the report to the second device.

In some embodiments, the report further indicates the number of failures for the access to the channel in the random access procedure and the means for generating the report comprises: means for in accordance with a determination that the response indicates a failure for the access to the channel, increasing the number of failures for the access to the channel.

In some embodiments, the means for generating the report comprises: means for determining at least one beam on which the random access procedure is performed; means for determining a power level of the first device for the access to the channel on the at least one beam; and means for generating the report further indicating the power level.

In some embodiments, the means for generating the report comprises: means for determining a reference signal received power on the at least one beam; and means for generating the report further indicating the reference signal received power.

In some embodiments, the means for generating the report comprises: means for in accordance with a determination that the response indicates a failure for the access to the channel, determining a path loss between the first device and the second device on the at least one beam; and means for generating the report further indicating the path loss.

In some embodiments, the means for generating the report comprises: means for in accordance with a determination that the power level of the first device exceeds a threshold power, generating the report further indicating the number attempts with the power level of the first device exceeding the threshold power.

In some embodiments, the apparatus further comprises means for in accordance with a determination that the number of failures for the access to the channel in the random access procedure exceeds a threshold number, extending a backoff duration before a subsequent attempt for the random access procedure, and the means for generating the report further comprises means for generating the report further indicating that the backoff duration is extended.

In some embodiments, the means for extending the backoff duration comprises means for receiving from the second device a configuration indicating a scaling factor; and means for extending the backoff duration by the scaling factor.

In some embodiments, the means for transmitting the report to the second device comprises means for in accordance with a determination that the random access procedure is prioritized, transmitting to the second device an indication that the report is available, and means for transmitting the report to the second device.

In some embodiments, the means for transmitting the report to the second device comprises means for receiving from the second device a retrieval request for a report of at least one predetermined type of random access procedure, the at least one predetermined type being selected from a prioritized type and a non-prioritized type; and means for in accordance with a determination that the type of the random access procedure matches with the at least one predetermined type, transmitting the report to the second device.

In some embodiments, the apparatus further comprises means in accordance with a determination that the random access procedure uses the one or more prioritized parameters and a further random access procedure uses one or more non-prioritized parameters for access to the channel, separately store the report of the random access procedure and a further report of the further random access procedure.

In some embodiments, the apparatus further comprises means for receiving from the second device a configuration for accessing the channel.

In some embodiments, the random access procedure which uses one or more prioritized parameters for access to the channel is triggered by at least one of the following: a handover of the first device, a beam failure recovery of the first device, or a predetermined access identity of the random access procedure.

In some embodiments, the first device comprises a terminal device and the second device comprises a network device.

In some example embodiments, a second apparatus capable of performing any of the method 800 (for example, the second device 220) may comprise means for performing the respective operations of the method 800. The means may be implemented in any suitable form. For example, the means may be implemented in a circuitry or software module. In some embodiments, the means may comprise at least one processor and at least one memory including computer program code. The at least one memory and computer program code are configured to, with the at least one processor, cause performance of the apparatus. The second apparatus may be implemented as or included in the second device 220.

In some embodiments, the apparatus comprises means for receiving, at a second device and from a first device, a request for access to a channel in a random access procedure; means for transmitting to the first device a response to the request; and means for receiving, from the first device, a report of the random access procedure, the report at least indicating whether the random access procedure uses one or more prioritized parameters for access to the channel.

In some embodiments, the apparatus further comprises means for updating a configuration for accessing the channel based on the report; and means for transmitting the updated configuration to the first device.

In some embodiments, the report further indicates at least one of: a power level of the first device for the access to the channel on at least one beam on which the random access procedure is performed, a reference signal received power on the at least one beam, a path loss between the first device and the second device on the at least one beam if the response indicates a failure for the access to the channel, or the number of failures for the access to the channel with the power level of the first device exceeding a threshold power.

In some embodiments, the apparatus further comprises means for transmitting to the first device further configuration indicating a scaling factor for extending a backoff duration before a subsequent attempt for the random access procedure in case the number of failures exceeds a threshold number.

In some embodiments, the means for receiving the report of the random access procedure comprises means for in response to receiving from the first device an indication that the report is available, receiving the report from the first device.

In some embodiments, the means for receiving the report of the random access procedure comprises means for transmitting to the first device a retrieval request for a report of at least one predetermined type of random access procedure, the at least one predetermined type being selected from a prioritized type and a non-prioritized type; and means for in accordance with a determination that the type of the random access procedure matches with the at least one predetermined type, receiving the report from the first device.

In some embodiments, the first device comprises a terminal device and the second device comprises a network device.

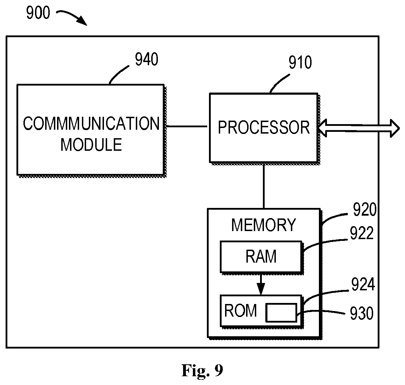

Fig. 9 is a simplified block diagram of a device 900 that is suitable for implementing example embodiments of the present disclosure. The device 900 may be provided to implement a communication device, for example, the first device 210 or the second device 220 as shown in Fig. 2. As shown, the device 900 includes one or more processors 910, one or more memories 920 coupled to the processor 910, and one or more communication modules 940 coupled to the processor 910.

The communication module 940 is for bidirectional communications. The communication module 940 has one or more communication interfaces to facilitate communication with one or more other modules or devices. The communication interfaces may represent any interface that is necessary for communication with other network elements. In some example embodiments, the communication module 940 may include at least one antenna.

The processor 910 may be of any type suitable to the local technical network and may include one or more of the following: general purpose computers, special purpose computers, microprocessors, digital signal processors (DSPs) and processors based on multicore processor architecture, as non-limiting examples. The device 900 may have multiple processors, such as an application specific integrated circuit chip that is slaved in time to a clock which synchronizes the main processor.

The memory 920 may include one or more non-volatile memories and one or more volatile memories. Examples of the non-volatile memories include, but are not limited to, a Read Only Memory (ROM) 924, an electrically programmable read only memory (EPROM), a flash memory, a hard disk, a compact disc (CD), a digital video disk (DVD), an optical disk, a laser disk, and other magnetic storage and/or optical storage. Examples of the volatile memories include, but are not limited to, a random access memory (RAM) 922 and other volatile memories that will not last in the power-down duration.

A computer program 930 includes computer executable instructions that are executed by the associated processor 910. The program 930 may be stored in the memory, e.g., ROM 924. The processor 910 may perform any suitable actions and processing by loading the program 930 into the RAM 922.

Some example embodiments of the present disclosure may be implemented by means of the program 930 so that the device 900 may perform any process of the disclosure as discussed with reference to Figs. 3 to 8. The example embodiments of the present disclosure may also be implemented by hardware or by a combination of software and hardware.

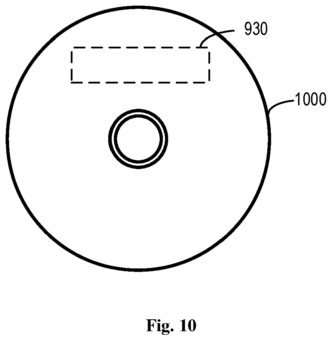

In some example embodiments, the program 930 may be tangibly contained in a computer readable medium which may be included in the device 900 (such as in the memory 920) or other storage devices that are accessible by the device 900. The device 900 may load the program 930 from the computer readable medium to the RAM 922 for execution. The computer readable medium may include any types of tangible non-volatile storage, such as ROM, EPROM, a flash memory, a hard disk, CD, DVD, and other magnetic storage and/or optical storage. Fig. 10 shows an example of the computer readable medium 1000 in form of an optical storage disk. The computer readable medium has the program 930 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

The present disclosure also provides at least one computer program product tangibly stored on a non-transitory computer readable storage medium. The computer program product includes computer-executable instructions, such as those included in program modules, being executed in a device on a target physical or virtual processor, to carry out any of the methods as described above with reference to Figs. 3 to 8. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program code or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in languages specific to structural features and/or methodological acts, it is to be understood that the present disclosure defined in the appended claims is not necessarily limited to the specific features or acts described above. Rather, the specific features and acts described above are disclosed as example forms of implementing the claims.

## Claims

1. An apparatus comprising:
means for transmitting, to a second device, a request for access to a channel in a random access procedure;
means for receiving from the second device a response to the request;
means for generating a report of the random access procedure based at least in part on the response, the report at least indicating whether the random access procedure uses one or more prioritized parameters for access to the channel; and
means for transmitting the report to the second device.

2. The apparatus of claim 1, wherein the report further indicates the number of failures for the access to the channel in the random access procedure, and, wherein the means for generating the report comprises:
in accordance with a determination that the response indicates a failure for the access to the channel, increasing the number of failures for the access to the channel.

3. The apparatus of claim 1, wherein the means for generating the report comprises:
determining at least one beam on which the random access procedure is performed;
determining a power level of the apparatus for the access to the channel on the at least one beam; and
generating the report further indicating the power level.

4. The apparatus of claim 1, further comprising:
means for extending a backoff duration before a subsequent attempt for the random access procedure in accordance with a determination that the number of failures for the access to the channel in the random access procedure exceeds a threshold number,
and wherein the means for generating the report further comprises:
generating the report further indicating that the backoff duration is extended.

5. The apparatus of claim 4, wherein the means for extending the backoff duration comprise:
receiving from the second device a configuration indicating a scaling factor; and
extending the backoff duration by the scaling factor.

6. The apparatus of claim 1, wherein the means for transmitting the report to the second device comprises:
in accordance with a determination that the random access procedure is prioritized, transmitting to the second device an indication that the report is available, and
transmitting the report to the second device.

7. The apparatus of claim 1, wherein the means for transmitting the report to the second device comprises:
receiving from the second device a retrieval request for a report of at least one predetermined type of random access procedure, the at least one predetermined type being selected from a prioritized type and a non-prioritized type; and
in accordance with a determination that the type of the random access procedure matches with the at least one predetermined type, transmitting the report to the second device.

8. The apparatus of claim 1, further comprising:
in accordance with a determination that the random access procedure uses the one or more prioritized parameters and a further random access procedure uses one or more non-prioritized parameters for access to the channel, means for separately storing the report of the random access procedure and a further report of the further random access procedure.

9. The apparatus of claim 1, further comprising:
means for receiving from the second device a configuration for accessing the channel, wherein the configuration is associated with the report.

10. The apparatus of claim 1, wherein the random access procedure which uses one or more prioritized parameters for access to the channel is triggered by at least one of the following:
a handover of the apparatus,
a beam failure recovery of the apparatus, or
a predetermined access identity of the random access procedure.

11. An apparatus comprising:
means for receiving, from a first device, a request for access to a channel in a random access procedure;
means for transmitting to the first device a response to the request; and
means for receiving from the first device a report of the random access procedure, the report at least indicating whether the random access procedure uses one or more prioritized parameters for the access to the channel.

12. The apparatus of claim 11, further comprising:
means for updating a configuration for accessing the channel based on the report; and
means for transmitting the updated configuration to the first device.

13. The apparatus of claim 11, wherein the report further indicates at least one of:
a power level of the first device for the access to the channel on at least one beam on which the random access procedure is performed,
a reference signal received power on the at least one beam,
a path loss between the first device and the apparatus on the at least one beam if the response indicates a failure for the access to the channel, or
the number of failures for the access to the channel with the power level of the first device exceeding a threshold power.

14. The apparatus of claim 11, further comprising:
means for transmitting to the first device further configuration indicating a scaling factor for extending a backoff duration before a subsequent attempt for the random access procedure in case the number of failures exceeds a threshold number.

15. The apparatus of claim 11, wherein the means for receiving the report of the random access procedure comprises:
transmitting to the first device a retrieval request for a report of at least one predetermined type of random access procedure, the at least one predetermined type being selected from a prioritized type and a non-prioritized type; and
receiving the report from the first device when the type of the random access procedure matches with the at least one predetermined type.

## Patentansprüche

1. Einrichtung, die Folgendes umfasst:
Mittel zum Übertragen einer Anforderung für einen Zugriff auf einen Kanal in einer Direktzugriffsprozedur zu einer zweiten Vorrichtung;
Mittel zum Empfangen einer Antwort auf die Anforderung von der zweiten Vorrichtung;
Mittel zum Erzeugen eines Berichts der Direktzugriffsprozedur mindestens teilweise auf Basis der Antwort, wobei der Bericht mindestens anzeigt, ob die Direktzugriffsprozedur einen oder mehrere priorisierte Parameter für einen Zugriff auf den Kanal verwendet; und
Mittel zum Übertragen des Berichts zur zweiten Vorrichtung.

2. Einrichtung nach Anspruch 1, wobei der Bericht ferner die Anzahl von Fehlschlägen für den Zugriff auf den Kanal in der Direktzugriffsprozedur anzeigt und wobei die Mittel zum Erzeugen des Berichts Folgendes umfassen:
gemäß einer Bestimmung, dass die Antwort für den Zugriff auf den Kanal einen Fehlschlag anzeigt, Erhöhen der Anzahl von Fehlschlägen für den Zugriff auf den Kanal.

3. Einrichtung nach Anspruch 1, wobei die Mittel zum Erzeugen des Berichts Folgendes umfassen:
Bestimmen von mindestens einem Strahl, auf dem die Direktzugriffsprozedur durchgeführt wird;
Bestimmen eines Leistungsniveaus der Einrichtung für den Zugriff auf den Kanal auf dem mindestens einen Strahl und
Erzeugen des Berichts, der ferner das Leistungsniveau anzeigt.

4. Einrichtung nach Anspruch 1, die ferner Folgendes umfasst:
Mittel zum Verlängern einer Rücksetzdauer vor einem nachfolgenden Versuch für die Direktzugriffsprozedur gemäß einer Bestimmung, dass die Anzahl von Fehlschlägen für den Zugriff auf den Kanal in der Direktzugriffsprozedur eine Schwellwertanzahl überschreitet,
und wobei die Mittel zum Erzeugen des Berichts ferner Folgendes umfassen:
Erzeugen des Berichts, der ferner anzeigt, dass die Rücksetzdauer verlängert wurde.

5. Einrichtung nach Anspruch 4, wobei die Mittel zum Verlängern der Rücksetzdauer Folgendes umfassen:
Empfangen einer Auslegung, die einen Skalierungsfaktor anzeigt, von der zweiten Vorrichtung und
Verlängern der Rücksetzdauer um den Skalierungsfaktor.

6. Einrichtung nach Anspruch 1, wobei die Mittel zum Übertragen des Berichts zur zweiten Vorrichtung Folgendes umfassen:
gemäß einer Bestimmung, dass die Direktzugriffsprozedur priorisiert ist, Übertragen einer Anzeige zur zweiten Vorrichtung, dass der Bericht verfügbar ist, und
Übertragen des Berichts zur zweiten Vorrichtung.

7. Einrichtung nach Anspruch 1, wobei die Mittel zum Übertragen des Berichts zur zweiten Vorrichtung Folgendes umfassen:
Empfangen einer Abrufanforderung für einen Bericht von mindestens einer vorbestimmten Art der Direktzugriffsprozedur von der zweiten Vorrichtung, wobei die mindestens eine vorbestimmte Art aus einer priorisierten Art und einer nicht priorisierten Art ausgewählt wird; und
gemäß einer Bestimmung, dass die Art der Direktzugriffsprozedur mit der mindestens einen vorbestimmten Art übereinstimmt, Übertragen des Berichts zur zweiten Vorrichtung.

8. Einrichtung nach Anspruch 1, die ferner Folgendes umfasst:
gemäß einer Bestimmung, dass die Direktzugriffsprozedur den einen oder die mehreren priorisierten Parameter verwendet und eine weitere Direktzugriffsprozedur einen oder mehrere nicht priorisierte Parameter für einen Zugriff auf den Kanal verwendet, Mittel für ein separates Speichern des Berichts der Direktzugriffsprozedur und eines weiteren Berichts der weiteren Direktzugriffsprozedur.

9. Einrichtung nach Anspruch 1, die ferner Folgendes umfasst:
Mittel zum Empfangen einer Auslegung zum Zugreifen auf den Kanal von der zweiten Vorrichtung, wobei die Auslegung mit dem Bericht verknüpft ist.

10. Einrichtung nach Anspruch 1, wobei die Direktzugriffsprozedur, die einen oder mehrere priorisierte Parameter für einen Zugriff auf den Kanal verwendet, von mindestens einem von Folgendem ausgelöst wird:
einer Übergabe der Einrichtung,
einer Strahlfehlerbehebung der Einrichtung oder
einer vorbestimmten Zugriffsidentität der Direktzugriffsprozedur.

11. Einrichtung, die Folgendes umfasst:
Mittel zum Empfangen einer Anforderung für einen Zugriff auf einen Kanal in einer Direktzugriffsprozedur von einer ersten Vorrichtung;
Mittel zum Übertragen einer Antwort auf die Anforderung zur ersten Vorrichtung und
Mittel zum Empfangen eines Berichts der Direktzugriffsprozedur von der ersten Vorrichtung, wobei der Bericht mindestens anzeigt, ob die Direktzugriffsprozedur einen oder mehrere priorisierte Parameter für den Zugriff auf den Kanal verwendet.

12. Einrichtung nach Anspruch 11, die ferner Folgendes umfasst:
Mittel zum Aktualisieren einer Auslegung zum Zugreifen auf den Kanal auf Basis des Berichts und
Mittel zum Übertragen der aktualisierten Auslegung zur ersten Vorrichtung.

13. Einrichtung nach Anspruch 11, wobei der Bericht ferner mindestens eines von Folgendem anzeigt:
ein Leistungsniveau der ersten Vorrichtung für den Zugriff auf den Kanal auf mindestens einem Strahl, auf dem die Direktzugriffsprozedur durchgeführt wird,
eine Referenzsignalempfangsleistung auf dem mindestens einen Strahl,
einen Pfadverlust zwischen der ersten Vorrichtung und der Einrichtung auf dem mindestens einen Strahl, wenn die Antwort einen Fehlschlag für den Zugriff auf den Kanal anzeigt, oder
die Anzahl von Fehlschlägen für den Zugriff auf den Kanal, wenn das Leistungsniveau der ersten Vorrichtung eine Schwellwertleistung überschreitet.

14. Einrichtung nach Anspruch 11, die ferner Folgendes umfasst:
Mittel zum Übertragen einer weiteren Auslegung zur ersten Vorrichtung, die einen Skalierungsfaktor zum Verlängern einer Rücksetzdauer vor einem nachfolgenden Versuch für die Direktzugriffsprozedur anzeigt, falls die Anzahl von Fehlschlägen die Schwellwertanzahl überschreitet.

15. Einrichtung nach Anspruch 11, wobei die Mittel zum Empfangen des Berichts der Direktzugriffsprozedur Folgendes umfassen:
Übertragen einer Abrufanforderung für einen Bericht von mindestens einer vorbestimmten Art der Direktzugriffsprozedur zur ersten Vorrichtung, wobei die mindestens eine vorbestimmte Art aus einer priorisierten Art und einer nicht priorisierten Art ausgewählt wird; und
Empfangen des Berichts von der ersten Vorrichtung, wenn die Art der Direktzugriffsprozedur mit der mindestens einen vorbestimmten Art übereinstimmt.

## Revendications

1. Appareil comprenant :
un moyen pour transmettre à un deuxième dispositif, une demande d'accès à un canal dans une procédure d'accès aléatoire ;
un moyen pour recevoir du deuxième dispositif une réponse à la demande ;
un moyen pour générer un rapport de la procédure d'accès aléatoire en se basant au moins en partie sur la réponse, le rapport indiquant au moins si la procédure d'accès aléatoire utilise un ou plusieurs paramètres prioritaires pour l'accès au canal ; et
un moyen pour transmettre le rapport au deuxième dispositif.

2. Appareil selon la revendication 1, dans lequel le rapport indique en outre le nombre d'échecs d'accès au canal dans la procédure d'accès aléatoire, et dans lequel le moyen pour générer le rapport comprend :
en déterminant que la réponse indique un échec d'accès au canal, l'augmentation du nombre d'échecs d'accès au canal.

3. Appareil selon la revendication 1, dans lequel le moyen pour générer le rapport comprend :
la détermination d'au moins un faisceau sur lequel la procédure d'accès aléatoire est réalisée ;
la détermination d'un niveau de puissance de l'appareil pour l'accès au canal sur l'au moins un faisceau ; et
la génération du rapport indiquant en outre le niveau de puissance.

4. Appareil selon la revendication 1, comprenant en outre :
un moyen pour prolonger une durée de réduction de puissance avant une nouvelle tentative de procédure d'accès aléatoire, en déterminant que le nombre d'échecs d'accès au canal dans la procédure d'accès aléatoire dépasse un nombre seuil,
et dans lequel le moyen pour générer le rapport comprend en outre :
la génération du rapport indiquant en outre que la durée de réduction de puissance a été prolongée.

5. Appareil selon la revendication 4, dans lequel le moyen pour prolonger la durée de réduction de puissance comprend :
la réception, du deuxième dispositif, d'une configuration indiquant un facteur d'échelle ; et
la prolongation de la durée de réduction de puissance par le facteur d'échelle.

6. Appareil selon la revendication 1, dans lequel le moyen pour transmettre le rapport au deuxième dispositif comprend :
en déterminant que la procédure d'accès aléatoire est prioritaire, la transmission au deuxième dispositif d'une indication selon laquelle le rapport est disponible, et
la transmission du rapport au deuxième dispositif.

7. Appareil selon la revendication 1, dans lequel le moyen pour transmettre le rapport au deuxième dispositif comprend :
la réception, du deuxième dispositif, d'une demande de récupération d'un rapport d'au moins un type prédéterminé de procédure d'accès aléatoire, l'au moins un type prédéterminé étant choisi parmi un type prioritaire et un type non prioritaire ; et
en déterminant que le type de la procédure d'accès aléatoire concorde avec l'au moins un type prédéterminé, la transmission du rapport au deuxième dispositif.

8. Appareil selon la revendication 1, comprenant en outre :
en déterminant que la procédure d'accès aléatoire utilise les un ou plusieurs paramètres prioritaires et qu'une procédure d'accès aléatoire supplémentaire utilise un ou plusieurs paramètres non prioritaires pour l'accès au canal, un moyen pour stocker séparément le rapport de la procédure d'accès aléatoire et un rapport supplémentaire de la procédure d'accès aléatoire supplémentaire.

9. Appareil selon la revendication 1, comprenant en outre :
un moyen pour recevoir du deuxième dispositif une configuration d'accès au canal, dans lequel la configuration est associée au rapport.

10. Appareil selon la revendication 1, dans lequel la procédure d'accès aléatoire qui utilise un ou plusieurs paramètres prioritaires pour l'accès au canal est déclenchée par au moins l'un des éléments suivants :
un transfert intercellulaire de l'appareil,
un rétablissement de faisceau échec de l'appareil, ou
une identité d'accès prédéterminée de la procédure d'accès aléatoire.

11. Appareil comprenant :
un moyen pour recevoir, d'un premier dispositif, une demande d'accès à un canal dans une procédure d'accès aléatoire ;
un moyen pour transmettre au premier dispositif une réponse à la demande ; et
un moyen pour recevoir du premier dispositif un rapport de la procédure d'accès aléatoire, le rapport indiquant au moins si la procédure d'accès aléatoire utilise un ou plusieurs paramètres prioritaires pour l'accès au canal.

12. Appareil selon la revendication 11, comprenant en outre :
un moyen pour mettre à jour une configuration d'accès au canal sur la base du rapport ; et
un moyen pour transmettre la configuration mise à jour au premier dispositif.

13. Appareil selon la revendication 11, dans lequel le rapport indique en outre au moins l'un des éléments suivants :
un niveau de puissance du premier dispositif pour l'accès au canal sur au moins un faisceau sur lequel la procédure d'accès aléatoire est réalisée,
une puissance de signal de référence reçu sur l'au moins un faisceau,
une perte de trajet entre le premier dispositif et l'appareil sur l'au moins un faisceau si la réponse indique un échec d'accès au canal, ou
le nombre d'échecs d'accès au canal avec le niveau de puissance du premier dispositif dépassant un seuil de puissance.

14. Appareil selon la revendication 11, comprenant en outre :
un moyen pour transmettre au premier dispositif une configuration supplémentaire indiquant un facteur d'échelle pour prolonger une durée de réduction de puissance avant une nouvelle tentative de procédure d'accès aléatoire au cas où le nombre d'échecs dépasse un nombre seuil.

15. Appareil selon la revendication 11, dans lequel le moyen pour recevoir le rapport de la procédure d'accès aléatoire comprend :
la transmission au premier dispositif d'une demande de récupération d'un rapport d'au moins un type prédéterminé de procédure d'accès aléatoire, l'au moins un type prédéterminé étant choisi parmi un type prioritaire et un type non prioritaire ; et
la réception du rapport du premier dispositif lorsque le type de la procédure d'accès aléatoire concorde avec l'au moins un type prédéterminé.
